# FASCICULE DE BREVET EUROPEEN

(11) **EP 1 608 531 B1**
(45) Date de publication et mention de la délivrance du brevet: **11.03.2009**
(21) Numéro de dépôt: 04742346.2
(22) Date de dépôt: 25.03.2004
(51) Int. Cl.: B60N 2/70, B60N 2/64

(54) **COUSSIN D'ASSISE POUR SIEGE DE VEHICULE AUTOMOBILE**
SITZKISSEN FÜR KRAFTFAHRZEUGSITZ
BASE CUSHION FOR A MOTOR VEHICLE SEAT

(30) Priorité: 01.04.2003 FR 0304009
(43) Date de publication de la demande: 28.12.2005
(73) Titulaire: RENAULT S.A.S., 92100 Boulogne Billancourt (FR)
(72) Inventeur: MAKALA, Jérôme, F-92410 Ville D'Avray (FR)
(86) Numéro de dépôt international: PCT/FR2004/000738
(87) Numéro de publication internationale: WO 2004/089682

(56) Documents cités:
- EP-A- 1 167 114
- DE-C- 19 908 655
- FR-A- 2 604 427
- US-A- 4 726 086
- US-A- 4 744 601
- US-A- 5 833 309
- US-A- 5 918 334
- US-A1- 2003 041 379
- US-B1- 6 206 474
- US-B1- 6 447 058

## Description

La présente invention concerne un coussin d'assise pour un véhicule automobile. La présente invention concerne également un siège de véhicule automobile comportant le coussin d'assise selon l'invention.

Les sièges des véhicules automobiles comportent, en général, un support d'assise sur lequel est disposé un coussin d'assise. L'ensemble formé par le support d'assise et le coussin d'assise permet d'assurer le confort d'assise de l'utilisateur et de filtrer les vibrations induites par les interactions du revêtement routier et des éléments de suspension du véhicule. Le coussin d'assise supporte directement l'utilisateur et doit donc être particulièrement confortable.

Le document US 4726086 (correspondant au préambule de la revendication indépendante 1) concerne un coussin d'assise composite qui comprend une couche de fond formant un évidement dans lequel est placée une couche de mousse plus souple.

Le document EP 1086852 décrit un coussin pour siège automobile qui comporte des cavités qui permettent d'ajuster la dureté de la face d'assise du coussin sans l'utilisation de plusieurs matériaux de duretés différentes. Hormis le fait de mieux répartir les pressions, ces cavités permettent de réduire l'inconfort dû au cisaillement (le cisaillement se détecte lorsque, sous l'effet des frottements, la peau ou les vêtements de l'utilisateur adhère(nt) à la surface du coussin d'assise). Elles permettent également un bon passage de l'air entre le séant de l'utilisateur et la surface d'assise. Ce type de coussin présente un coût de fabrication assez élevé notamment du fait de son moulage assez complexe.

Le but de la présente invention est de proposer un coussin d'assise présentant un bon confort pour l'utilisateur et dont la fabrication soit relativement simple.

Ce but est atteint au moyen d'un coussin d'assise de siège pour véhicule automobile comprenant un corps en mousse élastomère dont la face d'assise présente au moins un évidement. De manière caractéristique, selon l'invention telle que définie dans ladite revendication 1, un élément de support comportant au moins une poche remplie d'un gel viscoélastique est placé dans l'évidement précité. Cet élément de support est disposé en sorte de venir en contact avec la zone ischiatique d'un utilisateur assis sur le coussin.

La Demanderesse a en effet constaté que le confort d'assise peut être grandement amélioré en équipant la seule zone du coussin d'assise venant en contact avec les ischions et le coccyx de l'utilisateur, d'un élément de support tel que précité. Le gel viscoélastique permet d'obtenir une meilleure répartition des pressions dans le cas d'une assise d'épaisseur classique et une bonne répartition des pressions dans le cas d'un coussin d'épaisseur réduite. Il a également une fonction de transfert des contraintes de cisaillement : en effet, ce n'est plus le séant de l'utilisateur qui va être déplacé en translation sur la face d'assise du coussin mais les couches du gel qui, à l'échelle moléculaire, vont glisser les unes sur les autres. De plus, les propriétés thermiques du gel évitent une trop grande élévation de température due aux frottements, élévation de température qui s'avère être, à la longue, source d'inconfort.

L'utilisation d'une poche remplie de fluide a déjà été proposée dans le cas d'un support d'assise dans le document DE 19908655. Outre le fait que cette invention ne concerne pas le coussin d'assise mais la structure se trouvant sous ce dernier, elle nécessite l'ajustement de la forme de la poche par introduction ou retrait de fluide et ne peut donc pas être mise en oeuvre de manière commode, en particulier, dans le cas d'un fluide viscoélastique. En effet, l'utilisateur ou le revendeur de véhicules ne sont pas à même de pouvoir effectuer les ajustements requis pour adapter le support d'assise à la morphologie de chaque utilisateur.

Les gels viscoélastiques sont déjà utilisés pour les coussins anti-escarres tels que décrits, par exemple, dans le document US 5918334 ou le document FR 2778097. Dans le cas d'un coussin anti-escarres, même dans le cas d'un coussin anti-escarres pour fauteuil roulant, les contraintes ne sont pas les mêmes que dans le cas d'un coussin d'assise pour véhicule automobile. Dans le cas d'un coussin anti-escarres, la répartition des pressions est importante afin de ne pas abîmer par écrasement les tissus ou vaisseaux sanguins des zones du corps de l'utilisateur en contact perpétuel avec le coussin, mais elle n'est pas le facteur unique : il y a aussi le cisaillement (mais qui n'est alors pas dynamique) et les effets thermiques (difficulté à dissiper la chaleur produite par le séant). Dans le cas d'un coussin d'assise pour siège de véhicule automobile, le gel permet d'assurer un confort équivalent, sur une assise d'épaisseur réduite, à celui d'une assise classique. Si on utilise une mousse conventionnelle pour une assise d'épaisseur réduite, le confort ne peut pas être assuré (effet de poinçonnage). Pour pallier cet inconvénient, on utilise les gels des coussins qui permettent alors d'obtenir des niveaux de confort bien supérieurs à ce que l'on pourrait avoir sur un coussin de fauteuil roulant, par exemple. Si on met le gel sur un coussin d'assise d'épaisseur classique, on améliore la répartition des pressions, mais surtout la réduction du cisaillement dynamique, chose difficile avec une assise toute en mousse, et problème inconnu des coussins anti-escarre.

Par ailleurs, contrairement aux coussins anti-escarres, le problème de l'usure se pose de manière cruciale dans le domaine de l'industrie automobile. Le siège du véhicule doit garder ses caractéristiques tout au long de la durée de vie du véhicule car il est difficilement remplaçable. L'utilisation du gel viscoélastique permet de conférer au coussin d'assise une souplesse suffisante pour un bon confort et une bonne tenue sur l'assise sans modification de cette souplesse ni de l'épaisseur globale du coussin du fait de l'usure. En effet, il n'y a pratiquement aucun effet de poinçonnement de l'élément de support contenant le gel viscoélastique, contrairement aux mousses souples, couramment utilisées, qui se déforment et se tassent au cours du temps, sous l'effet du poids de l'utilisateur.

D'autre part, le gel viscoélastique est dense et son utilisation dans le domaine dé l'industrie automobile ne s'avère pas évidente car on évite, pour des raisons de consommation de carburant, d'alourdir les véhicules automobiles. La Demanderesse a donc eu le mérite de proposer l'utilisation d'un élément de support comportant au moins une poche remplie de gel viscoélastique sur une surface réduite à la surface du coussin d'assise venant en contact avec les ischions et le coccyx de l'utilisateur. De manière surprenante, il s'est de plus avéré qu'il était ainsi possible de réduire également l'épaisseur du corps du coussin d'assise ce qui permet de diminuer le poids du coussin entier.

Le coussin de l'invention peut être réalisé assez aisément car le corps du coussin présente une forme simple. L'évidement où est logé l'élément de support peut être réalisé, simplement, par moulage, lors du moulage du corps lui-même. L'élément de support peut être formé d'une poche que l'on vient fixer par la suite dans l'évidement ou d'un film que l'on soude sur le corps du coussin en sorte de former une poche ou des poches qui seront ensuite remplies de gel viscoélastique.

Selon un mode de réalisation particulier, l'élément de support est disposé au niveau du fond de l'assise et s'étend sur une zone de demi-largeur comprise entre 90 et 160 mm par rapport à l'axe médian du coussin et de longueur comprise entre 190mm et 400mm, mesurée à partir du fond de l'assise.

La Demanderesse a en effet constaté qu'une telle zone correspond à la zone du coussin d'assise venant en contact avec les zones ischiatiques de 95% des utilisateurs et utilisatrices. Par contre, cette zone ne tient pas compte des 5% d'utilisatrices qui ont une zone ischiatique plus réduite ni des 5% d'utilisateurs qui sont plus corpulents que la moyenne.

Selon l'invention, l'élément de support présente une forme de haricot dont les deux branches sont orientées vers le bord libre de la face d'assise. Comme il le sera plus amplement expliqué ultérieurement, cette forme permet une bonne répartition des pressions et une bonne tenue sur l'assise.

Dans le cas de ce mode de réalisation, l'évidement entre les branches peut avoir une profondeur comprise entre 150mm et 250mm.

Selon un mode de réalisation particulier, l'élément de support comporte une pluralité de poches remplies de gel viscoélastique et séparées les unes des autres par des rainures. La présence des rainures permet de réduire encore les frottements et le cisaillement. Par ailleurs, elle permet de réduire la quantité de gel utilisée sans modification du confort et de la tenue sur l'assise et d'autre part de faciliter la circulation de l'air entre le coussin d'assise et le séant de l'utilisateur. Enfin, en cas de rupture accidentelle d'une des poches, le coussin d'assise peut encore être utilisable.

Selon un mode de réalisation, l'élément de support comporte deux poches ischiatiques sensiblement circulaires remplies de gel disposées dans la zone de la face d'assise susceptible de venir en contact avec les ischions d'un utilisateur. Une telle configuration permet de réduire considérablement le cisaillement et assure une bonne répartition des pressions.

Selon une variante de réalisation, les poches ischiatiques comportent quatre poches séparées par des rainures ce qui permet de faciliter comme précédemment expliqué le passage de l'air.

Selon un autre mode de réalisation, l'élément support comporte deux zones ischiatiques sensiblement circulaires disposées dans la zone de la face d'assise susceptible de venir en contact avec les ischions d'un utilisateur, ces zones ischiatiques ne contenant pas de gel viscoélastique. Les zones dépourvues dé gel permettent un bon positionnement des ischions de l'utilisateur et donc une bonne tenue sur le coussin.

Le matériau utilisé pour réaliser le corps du coussin n'est pas limité selon l'invention. Il peut s'agir, par exemple, d'une mousse de polyuréthanne.

La présente invention concerne également un siège de véhicule automobile caractérisé en ce qu'il comporte le coussin d'assise selon l'invention. Dans ce siège, l'élément de support comporte au moins une poche, remplie de gel, et disposée au niveau de la zone de la face d'assise susceptible de venir en contact avec le coccyx d'un utilisateur.

La présente invention, ses caractéristiques et différents avantages apparaîtront mieux à la lecture de la description qui suit, d'un mode de réalisation particulier de l'invention et de deux de ses variantes, et qui fait références aux dessins annexés sur lesquels :
- la figure 1 représente une vue du dessus d'un mode de réalisation particulier de l'invention dans lequel l'élément de support a la forme d'un haricot ;
- la figure 2 représente une vue en coupe transversale, selon l'axe II, du mode de réalisation de la figure 1 ;
- la figure 3 représente, en vue du dessus, une première variante de réalisation du mode de réalisation de la figure 1;
- la figure 4 représente une vue en coupe transversale selon l'axe IV, de cette première variante ; et
- la figure 5 représente une seconde variante du mode de réalisation de la figure 1.

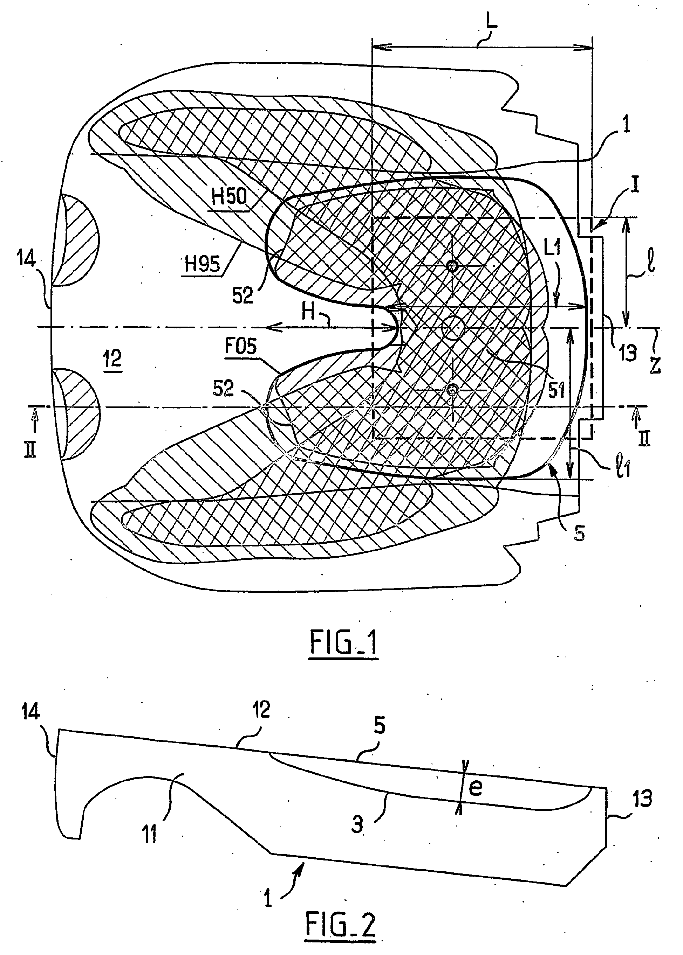

En référence aux figures 1 et 2, un mode de réalisation particulier de l'invention va être décrit. Le coussin d'assise 1 comporte un corps 11 en mousse élastomère du type polyuréthanne. La face d'assise 12 de ce corps qui est susceptible de venir en contact avec l'utilisateur comporte un évidement 3. La profondeur e de l'évidement 3 est variable. Sa valeur maximale peut être comprise entre 5mm et 15mm et, comme représenté, de l'ordre de 10mm.

Dans le mode de réalisation représenté, l'élément de support 5 qui est placé dans l'évidement 3 est formé d'une seule poche remplie de gel viscoélastique. Cet élément de support 5 présente, dans ce mode de réalisation particulier, une forme de haricot, symétrique par rapport à l'axe médian Z du coussin, c'est-à-dire qu'il comporte une partie centrale 51 et deux branches parallèles 52 orientées vers le bord libre 14 de la face d'assise 12. L'épaisseur de cet élément de support 5 est variable, comme représenté sur la figure 2, et correspond sensiblement à la profondeur e de l'évidement 3 en sorte d'obtenir une surface d'assise 12 plane. Ainsi l'élément de support 5 est plus épais au niveau de là partie centrale 51 et plus mince au niveau des branches 52. L'élément de support est disposé dans le fond de l'assise, à proximité du bord 13 du coussin, destiné à recevoir le dossier du siège.

Sur la figure 1, la zone H95 représente le 95^{ème} percentile homme. La zone F05 représenté le 5^{ième} percentile femme. On comprend donc que lorsque l'élément de support 5 est disposé au moins au niveau de la zone I, il vient en contact avec la zone ischiatique de 95% des utilisateurs et utilisatrices. Comme représenté, la zone I a une demi largeur 1 comprise entre 90 et 160 mm par rapport à l'axe médian Z du coussin et une longueur L comprise entre 190mm et 400mm.

Les dimensions de l'élément de support 5 sont telles que suit. La partie centrale 51 de l'élément de support 5 a une longueur L1 comprise entre 150mm et 210mm et, par exemple, égale à 190mm, comme représenté. Sa demi-largeur 11, par rapport à l'axe médian Z, est comprise entre 110mm et 160mm. Dans l'exemple représenté, la profondeur H de l'évidement entre les branches 52, qui correspond à la portion des branches dépassant de la partie centrale 51, est de l'ordre de 100mm. Cette profondeur peut être comprise entre 90mm et 250mm. Ces dimensions permettent d'assurer un confort optimal en limitant la surface couverte par l'élément de support 5. Dans l'exemple représenté, l'épaisseur maximale du corps 11 est de l'ordre de 30mm.

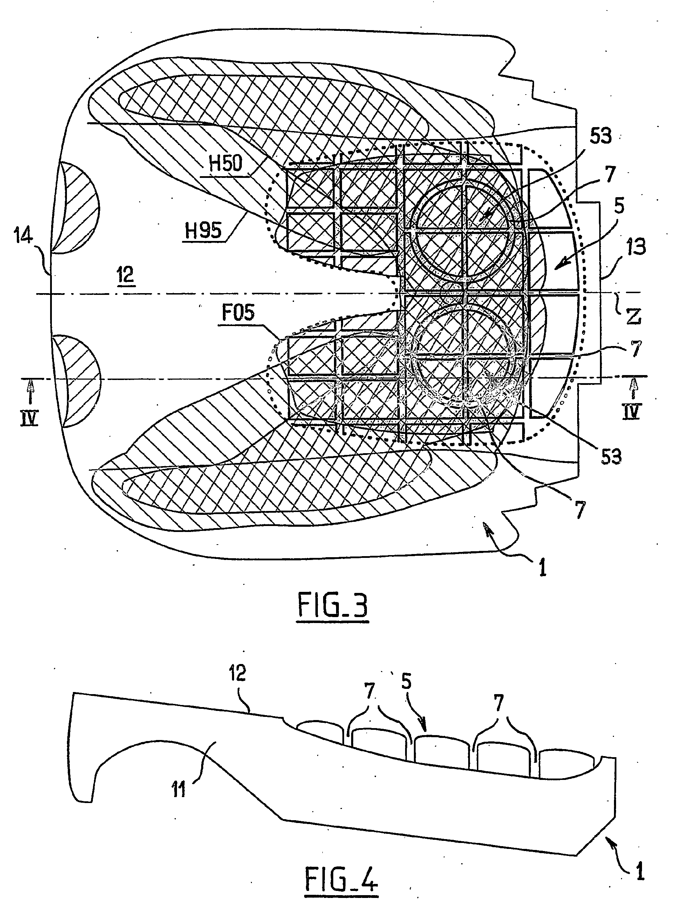

En référence aux figures 3 et 4, la première variante comporte un élément support 5 formé d'une pluralité de poches dont deux poches ischiatiques 53 disposées de manière symétrique par rapport à l'axe Z et sensiblement au milieu de la partie centrale 51. Toutes les poches sont séparées par des rainures 7. Dans la variante représentée, les poches ischiatiques 53 sont sensiblement circulaires et divisées chacune en quatre poches séparées également par des rainures 7. L'homme du métier est à même d'adapter la forme et le nombre des poches en fonction des dimensions et de la forme du siège.

Comme représenté sur la figure 4, les rainures 7 sont en creux et permettent le passage de l'air entre le séant de l'utilisateur et la face d'assise 12 du coussin, même lorsque le coussin est revêtu d'un textile. Les rainures 7 peuvent être facilement formées en soudant localement les deux parois d'une même poche ce qui permet de former dans le même temps, la pluralité de poches précitée.

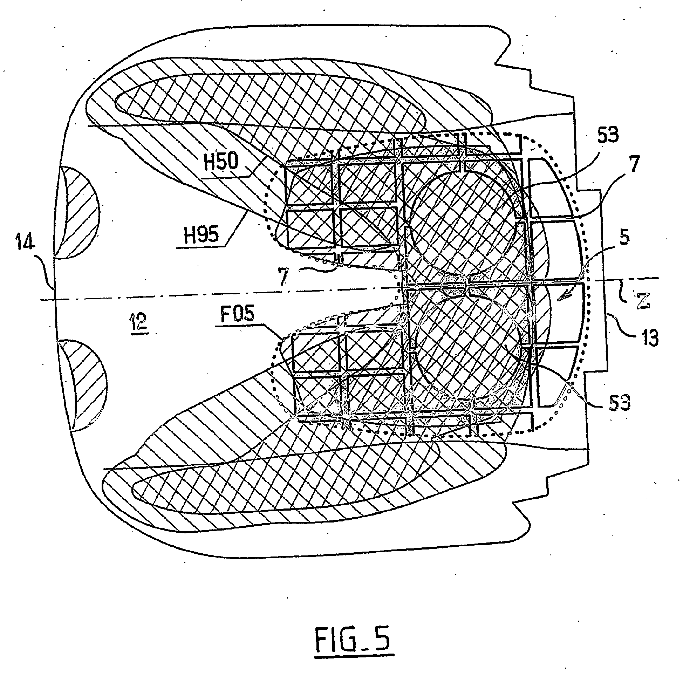

En référence à la figure 5, selon une seconde variante, les zones ischiatiques 53 ne sont pas remplies de gel viscoélastique et sont donc au même niveau que les rainures 7. Ces zones ischiatiques 53, en creux, permettent un bon positionnement des ischions. En effet ces derniers se trouvent en quelque sorte insérés dans ces zones sans pour autant venir en contact avec le fond de ces dernières car le reste de la zone ischiatique de l'utilisateur est maintenue surélevée par l'épaisseur des poches entourant les zones ischiatiques 53 et celle des autres poches formant le reste de l'élément support 5.

Grâce à l'ajout de l'élément de support 5, l'épaisseur du corps 11 peut être considérablement réduite avec une portance augmentée.

## Revendications

1. Coussin (1) d'assise de siège pour véhicule automobile comprenant un corps (11) en mousse élastomère dont la face d'assise (12) présente au moins un évidement (3), **caractérisé en ce qu'**un élément de support (5) comportant au moins une poche remplie d'un gel viscoélastique est placé dans ledit évidement (3) en sorte de pouvoir venir en contact avec la zone ischiatique d'un utilisateur assis sur ledit coussin (1), et **en ce que** ledit élément de support (5) présente une forme de haricot dont les deux branches (52) sont orientées vers le bord libre (14) de la face d'assise (12) dudit coussin.

2. Coussin d'assise (1) selon la revendication 1, **caractérisé en ce que** ledit élément de support (5) est disposé au niveau du fond de l'assise et s'étend sur une zone (I) de demi-largeur (1) comprise entre 90 et 160 mm par rapport à l'axe médian (Z) du coussin et de longueur (L) comprise entre 190mm et 400mm.

3. Coussin d'assise (1) selon l'une quelconque des revendications 1 à 2, **caractérisé en ce que** ledit élément de support (5) comporte une pluralité de poches remplies de gel viscoélastique et séparées les unes des autres par des rainures (7).

4. Coussin d'assise (1) selon l'une quelconque des revendications 1 à 3, **caractérisé en ce que** ledit élément de support (5) comporte deux poches ischiatiques (53) sensiblement circulaires, remplies de gel, et disposées au niveau de la zone de ladite face d'assise (12) susceptible de venir en contact avec les ischions d'un utilisateur.

5. Coussin d'assise (1) selon la revendication 4, **caractérisé en ce que** lesdites poches ischiatiques (53) sont formées chacune de quatre poches séparées par des rainures (7).

6. Coussin d'assise (1) selon l'une quelconque des revendications 1 à 3, **caractérisé en ce que** ledit élément de support (5) comporte deux zones ischiatiques (53) sensiblement circulaires disposées dans la zone de ladite face d'assise susceptible de venir en contact avec les ischions d'un utilisateur, lesdites zones ischiatiques (53) ne contenant pas de gel viscoélastique.

7. Coussin d'assise (1) selon l'une quelconque des revendications 1 à 6, **caractérisé en ce que** ladite mousse élastomère est une mousse de polyuréthanne.

8. Siège de véhicule automobile **caractérisé en ce qu'**il comporte le coussin d'assise selon l'une quelconque des revendications 1 à 7.

9. Siège selon la revendication 8, **caractérisé en ce que** ledit élément de support (5) comporte au moins une poche, remplie de gel, et disposée au niveau de la zone de ladite face d'assise (12) susceptible de venir en contact avec le coccyx d'un utilisateur.

## Claims

1. Base cushion (1) for a motor vehicle seat comprising a body (11) made from elastomeric foam, of which the seating face (12) has at least one recess (3), **characterized in that** a support element (5) comprising at least one pocket filled with a viscoelastic gel is placed in said recess (3) so as to be able to come into contact with the ischiatic region of a user seated on said cushion (1), and **in that** said support element (5) is bean-shaped, of which the two arms (52) are oriented towards the free edge (14) of the seating face (12) of said cushion.

2. Base cushion (1) according to Claim 1, **characterized in that** said support element (5) is arranged at the back of the seat and extends over a region (I) having a half-width (1) of between 90 and 160 mm, relative to the median axis (Z) of the cushion, and having a length (L) of between 190 mm and 400 mm.

3. Base cushion (1) according to any one of Claims 1 to 2, **characterized in that** said support element (5) comprises a plurality of pockets filled with viscoelastic gel and separated from one another by grooves (7).

4. Base cushion (1) according to any one of Claims 1 to 3, **characterized in that** said support element (5) comprises two substantially circular ischiatic pockets (53), filled with gel, and arranged at the region of said seating face (12), capable of coming into contact with the ischia of a user.

5. Base cushion (1) according to Claim 4, **characterized in that** said ischiatic pockets (53) are each formed by four pockets separated by grooves (7).

6. Base cushion (1) according to any one of Claims 1 to 3, **characterized in that** said support element (5) comprises two substantially circular ischiatic regions (53) arranged at the region of said seating face, capable of coming into contact with the ischia of a user, said ischiatic regions (53) not containing viscoelastic gel.

7. Base cushion (1) according to any one of Claims 1 to 6, **characterized in that** said elastomeric foam is a polyurethane foam.

8. Motor vehicle seat **characterized in that** it comprises the base cushion according to any one of Claims 1 to 7.

9. Seat according to Claim 8, **characterized in that** said support element (5) comprises at least one pocket, filled with gel, and arranged at the region of said seating face (12), capable of coming into contact with the coccyx of a user.

## Patentansprüche

1. Sitzflächenkissen (1) für Kraftfahrzeug, das einen Körper (11) aus Elastomerschaumstoff aufweist, dessen Sitzfläche (12) mindestens eine Aussparung (3) aufweist, **dadurch gekennzeichnet, dass** ein Tragelement (5), das mindestens eine Tasche aufweist, die mit einem viskoelastischen Gel gefüllt ist, derart in die Aussparung (3) gegeben wird, dass es mit der ischiatischen Zone eines Benutzers, der auf dem Kissen (1) sitzt, in Berührung kommen kann, und dass das Tragelement (5) eine Bohnenform aufweist und seine zwei Schenkel (52) zum freien Rand (14) der Sitzfläche (12) des Kissens gerichtet sind.

2. Sitzflächenkissen (1) nach Anspruch 1, **dadurch gekennzeichnet, dass** das Tragelement (5) auf dem Grundniveau der Sitzfläche angeordnet ist und sich auf einer Zone (I) mit halber Breite (1) zwischen 90 und 160 mm in Bezug zu der Mittenachse (Z) des Kissens und einer Länge (L) zwischen 190 mm und 400 mm erstreckt.

3. Sitzflächenkissen (1) nach einem der Ansprüche 1 bis 2, **dadurch gekennzeichnet, dass** das Tragelement (5) mehrere Taschen, die mit viskoelastischem Gel gefüllt und voneinander durch Rillen (7) getrennt sind, aufweist.

4. Sitzflächenkissen (1) nach einem der Ansprüche 1 bis 3, **dadurch gekennzeichnet, dass** das Tragelement (5) zwei ischiatische Taschen (53) aufweist, die im Wesentlichen kreisförmig, mit Gel gefüllt und auf dem Niveau der Zone der Sitzfläche (12), die mit den Sitzbeinen eines Benutzers in Berührung kommen kann, angeordnet sind.

5. Sitzflächenkissen (1) nach Anspruch 4, **dadurch gekennzeichnet, dass** die ischiatischen Taschen (53) jeweils aus vier durch Rillen (7) getrennte Taschen ausgebildet sind.

6. Sitzflächenkissen (1) nach einem der Ansprüche 1 bis 3, **dadurch gekennzeichnet, dass** das Tragelement (5) zwei ischiatische Zonen (53) aufweist, die im Wesentlichen kreisförmig sind und in der Zone der Sitzfläche, die mit den Sitzbeinen eines Benutzers in Berührung kommen kann, angeordnet sind, wobei die ischiatischen Zonen (53) kein viskoelastisches Gel enthalten.

7. Sitzflächenkissen (1) nach einem der Ansprüche 1 bis 6, **dadurch gekennzeichnet, dass** der Elastomerschaumstoff ein Polyurethanschaumstoff ist.

8. Kraftfahrzeugsitz, **dadurch gekennzeichnet, dass** er das Sitzflächenkissen nach einem der Ansprüche 1 bis 7 aufweist.

9. Sitz nach Anspruch 8, **dadurch gekennzeichnet, dass** das Tragelement (5) mindestens eine Tasche aufweist, die mit Gel gefüllt und auf dem Niveau der Zone der Sitzfläche (12), die mit dem Steißbein eines Benutzers in Berührung kommen kann, angeordnet ist.
